Europäisches Patentamt

European Patent Office

Office européen des brevets

(11) Publication number: **0 428 135 A2**

# EUROPEAN PATENT APPLICATION

(21) Application number: **90121715.8**

(22) Date of filing: **13.11.90**

(51) Int. Cl.⁵: **G06F 15/20**

(30) Priority: **13.11.89 JP 294744/89**

(43) Date of publication of application:
**22.05.91 Bulletin 91/21**

(84) Designated Contracting States:
**DE GB**

(71) Applicant: **Komatsu Ltd.**
**Komatsu Bldg. 2-3-6 Akasaka,**
**Minato-ku Tokyo 107(JP)**

Applicant: **YAMATAKE-HONEYWELL CO. LTD.**
**12-19 Shibuya 2 Chome Shibuya-Ku**
**Tokyo 150(JP)**

(72) Inventor: **Miyata, Hiroshi**
**132, Aojimachi**
**Komatsu-city, Ishikawa(JP)**
Inventor: **Ashikawa, Takeshi**
**2-14-15, Nishiyawata**
**Hiratsuka-city, Kanagawa(JP)**

(74) Representative: **Kahler, Kurt, Dipl.-Ing.**
**Postfach 1249 Gerberstrasse 3**
**W-8948 Mindelheim(DE)**

(54) **Fault diagnosing apparatus and method.**

(57) A fault diagnosing apparatus includes a fault tree, a storage section (3a), a read control section (3), a display section (4), a designating section (6), and a rewrite section (6), The fault tree is designed such that a plurality of choices are set with respect to one question associated with a cause of a fault of a fault diagnosis target, answers and choices branch off from each of the choices, and final choices reach causes of the fault. The storage section stores fault repair items with respect to the causes of the fault. In response to an input operation to select one of the choices, the read control section reads out the selected choice, a corresponding question, choices branching off therefrom, and fault repair items. The display section displays the question, the choices, and the fault repair items which are read out by the read control section. The designating section designates to update the fault repair items. The rewrite section rewrites some of the fault repair items stored in the storage section by using update data externally provided on the basis of the designation from the designating section.

FIG.1

# FAULT DIAGNOSING APPARATUS AND METHOD

## Background of the Invention

The present invention relates to a fault diagnosing apparatus for detecting the cause of a fault when a control target in, e.g., a sequence control system failed, and a corresponding diagnosing method.

In a sequence control system, a control target, such as a plant, a processing apparatus, or an equipment system, is properly operated by controlling a large number of sensors and actuators, e.g., limit switches and solenoid valves, at predetermined timings based on a sequence program using a sequence controller in accordance with signals from various sensors arranged at the respective portions of the control target. In addition, such a system has a function of diagnosing a fault in a control target during an operation. When a fault is detected, the fault is displayed by means of a lamp, a message, or the like.

In the conventional fault diagnosis, therefore, faults are very roughly diagnosed, and the number of items of faults which can be detected is very small. For example, in a press machine or the like, the number of items is about 10 to 250. In addition to fault diagnosis of a control target, fault diagnosis of the above-mentioned sequence controller itself, including a large number of contacts and actuators, various sensors, and the like, is performed. However, in the above-described fault diagnosis function, the display contents of abnormal states are limited to only phenomena, and true causes thereof are not displayed at all.

Furthermore, the sequence program includes a control program and a program for fault diagnosis. The two programs are alternately executed. Therefore, the total capacity of programs is increased to increase a programming load. This may also interfere with the execution of the control program, and pose other problems, e.g., that fault diagnosis cannot be performed. at high speed.

In the above-described fault diagnosis function, when a fault is detected, an operation of a control target is stopped as needed and only a message of an abnormal state is displayed. However, more detailed fault diagnosis, e.g., information of the cause of the fault or repair items indicating a repair method of the fault, cannot be informed to a user.

For this reason, when a fault is detected and displayed, an operator in charge of maintenance checks a portion at which the fault has occurred, and also checks an operation manual. The operator then determines the cause of the fault or the repair items and performs a proper operation.

For this purpose, therefore, the operator is required to have experience and skill. In addition, it is generally difficult to properly read a large volume of an operation manual within a short period of time. For this reason, a fault repair may require a long period of time.

Especially when a control target is a manufacturing machine such as a press machine, MTTR (mean time to repair = total time to repair faults/total number of faults to be repaired) is considered as an important factor. That is, it is important to repair a fault within a short period of time. For this purpose, it is very important to detect the cause of a fault within a short period of time.

## Summary of the Invention

The present invention has been made to solve the above problem, and has as its object to provide a fault diagnosing apparatus which can detect the cause of a fault-within a short period of time and can inform an operator of repair items indicating a repair method.

In order to achieve the above object, according to the present invention, there is provided a fault diagnosing apparatus comprising a fault tree in which a plurality of choices are set with respect to one question associated with a cause of a fault of a fault diagnosis target, answers and choices branch off from each of the choices, and final choices reach causes of the fault, storage means for storing fault repair items with respect to the causes of the fault, read control means for, in response to an input operation to select one of the choices, reading out the selected choice, a corresponding question, choices branching off therefrom, and fault repair items, display means for displaying the question, the choices, and the fault repair items which are read out by the read control means, designating means for designating to update the fault repair items, and rewrite means for rewriting some of the fault repair items stored in the storage means by using update data externally provided on the basis of the designation from the designating means.

After one cause of a fault is reached through a fault tree in an interactive mode, repair items of the fault are displayed. In addition, the repair items are designated to be selectively updated, rewriting of the repair items is performed in accordance with the designation.

## Brief Description of the drawings

Fig. 1 is a block diagram showing a sequence control system using a fault diagnosing apparatus according to the present invention;

Fig. 2 is a view showing an arrangement of data, such as a fault tree, stored in a memory of the apparatus in Fig. 1;

Fig. 3 is a flow chart showing an operation method to be executed by the apparatus in Fig. 1;

Figs. 4 to 9 are views each showing a display screen of a display section used by the apparatus in Fig. 1;

Fig. 10 is a flow chart showing diagnosis processing of the apparatus in Fig. 1; and

Fig. 11 is a flow chart showing a fault repair item updating method to be executed by the apparatus in Fig. 1.

Description of the Preferred Embodiments

An embodiment of the present invention will be described below with reference to the accompanying drawings.

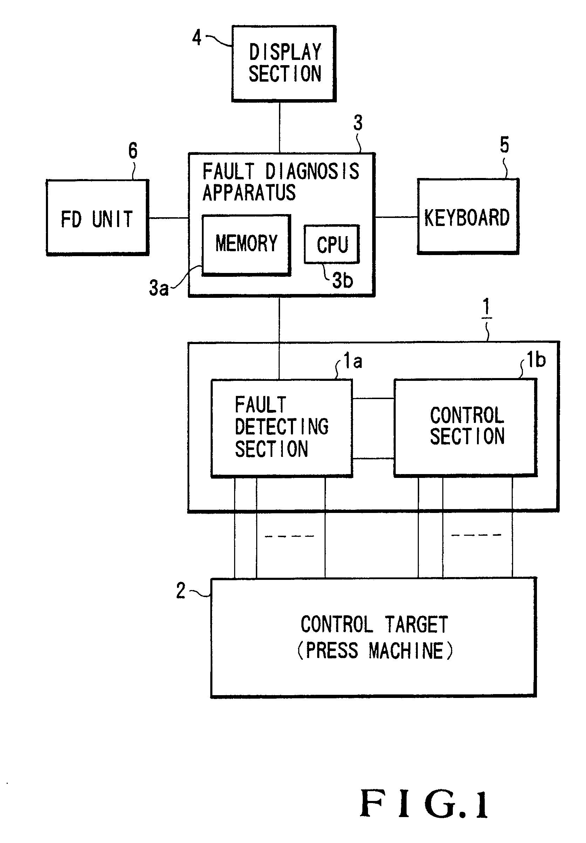

Referring to Fig. 1, reference numeral 1 denotes a sequence controller; 2, a large press machine as a control target to be controlled by the sequence controller 1; 1a, a fault detecting section, of the sequence controller 1, for detecting an abnormal state (fault) of the press machine 2; 1b, a control section, of the sequence controller 1, for controlling an operation of the press machine 2 and roughly detecting a fault; 3, a fault diagnosis apparatus, constituted by a memory 3a, a CPU, and the like, for checking the cause of a fault on the basis of a fault detection signal from the sequence controller 1; 4, a display section, constituted by a CRT or the like and connected to the fault diagnosing apparatus 3, for displaying questions, answers, probabilities, and the like in accordance with the interaction between an operator and the apparatus 3; 5, a keyboard for inputting an answer selected by the operator with respect to the apparatus 3; and 6, a floppy disk (FD) unit for providing update data of repair items to the fault diagnosing apparatus 3.

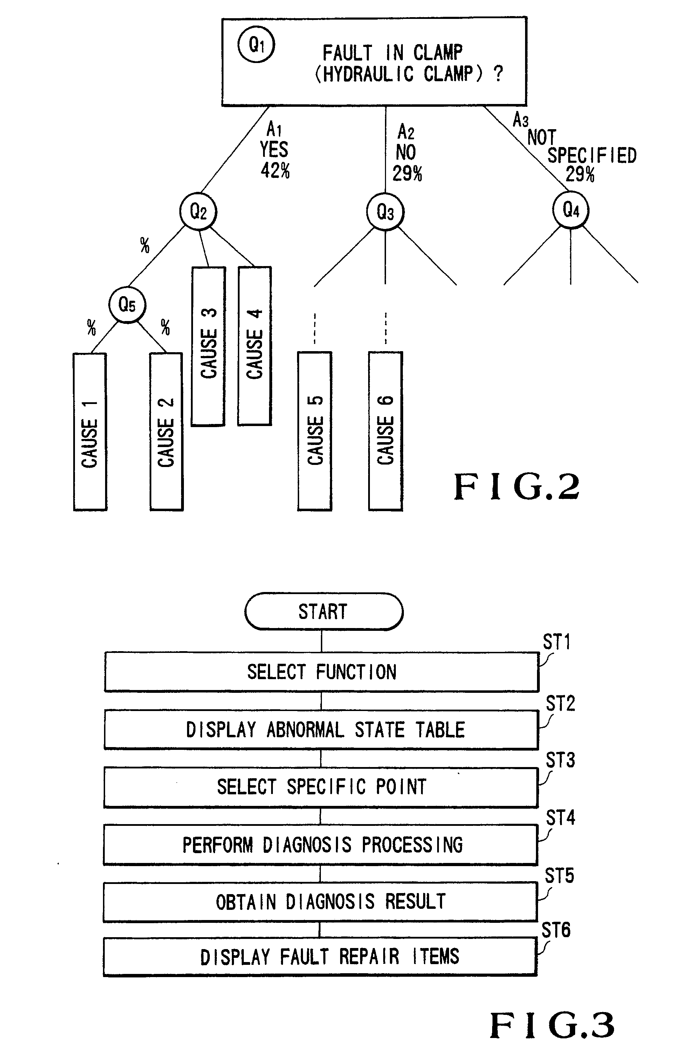

Fig. 2 shows various data including a fault tree and the like registered in the memory 3a.

In this fault tree, a first question $Q_1$ is set in relation to one fault. Three answers $A_1$, $A_2$, and $A_3$ are prepared as choices with respect to the question $Q_1$. Questions Q2, Q3, and Q4 are respectively set after the choices. These questions then branch out into choices. Final choices reach a cause 1, a cause 2, cause 3,.... The memory 3a serves to store data representing the number of times the states of the answers $A_1$, $A_2$, and $A_3$ as the choices constituting the fault tree occur, and data representing the number of times the respective answers are used (selected) in the past. In addition, the memory 3a stores fault repair items with respect to the causes 1, 2, 3....

An operation will be described below with reference to a flow chart in Fig. 3.

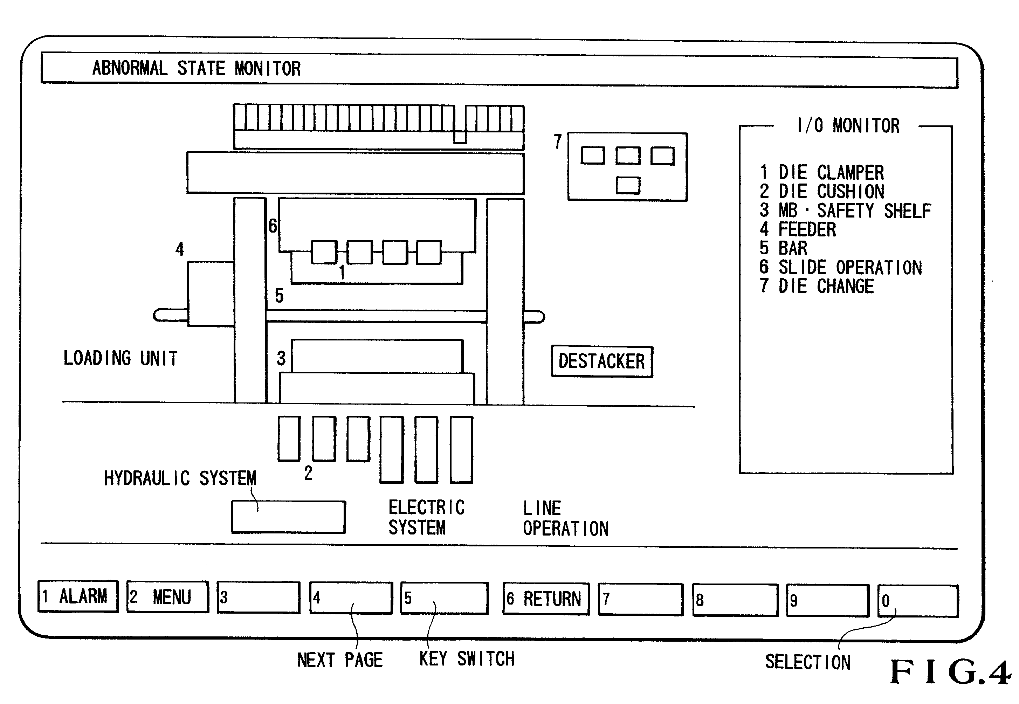

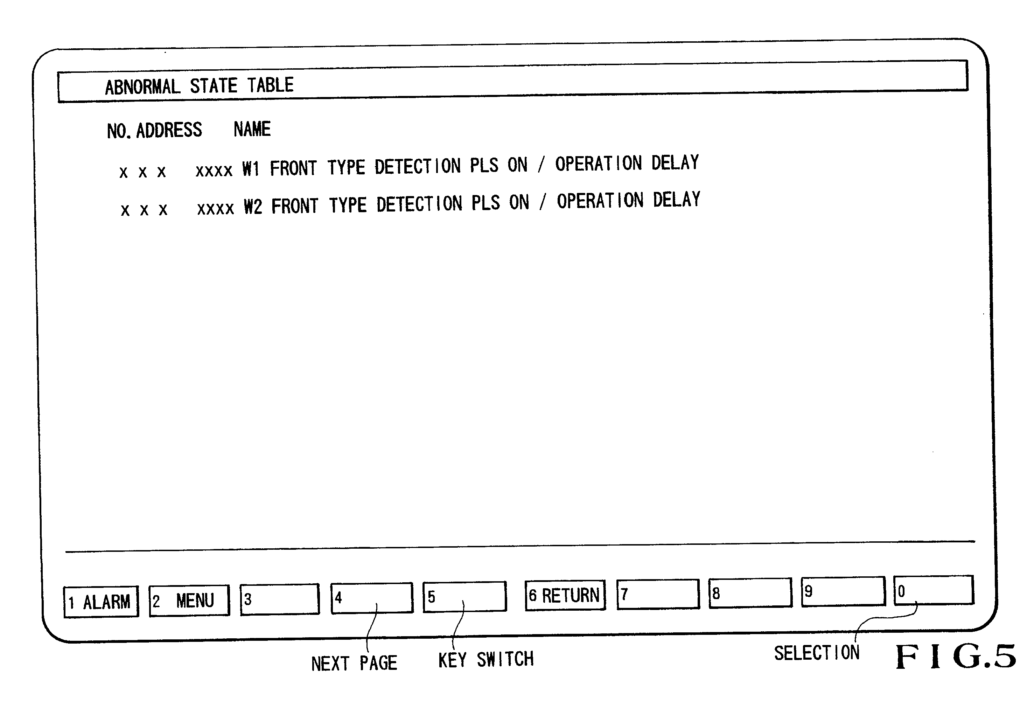

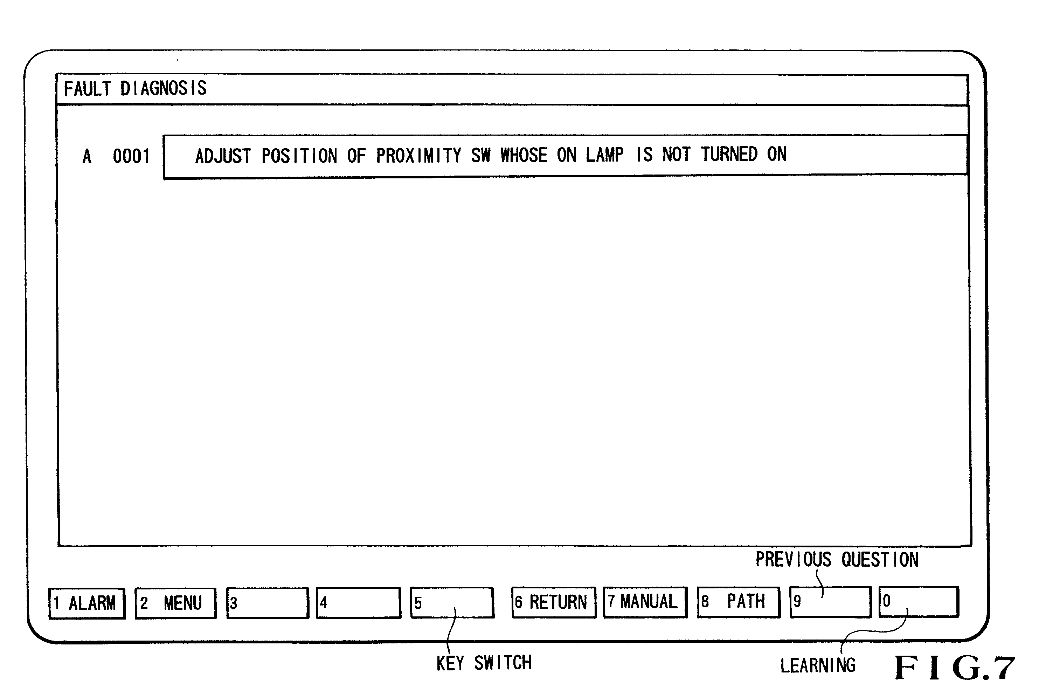

When a fault occurs in the press machine 2, the operator operates the keyboard 5 in step ST1 to select an abnormal state monitor function of the fault diagnosing apparatus. With this operation, a schematic representation of the press machine 2 shown in Fig. 4 is displayed on the display section 4. In this case, the display section 4 displays the occurrence of an abnormal state in a die clamper by changing the display color of hatched portions in Fig. 4. When the keyboard 5 is operated again in step ST2, an abnormal state table shown in Fig. 5 is displayed. When a specific point is designated from this table in step ST3, the flow advances to step ST4 to perform diagnosis processing in which selection of questions and answers is performed in an interactive mode in accordance with the above-mentioned fault tree. With this operation, a diagnosis result, i.e., the cause of the fault can be detected in step STS. In step STS, a message shown in Fig. 7 is displayed, and a manual key is designated as one of function keys.

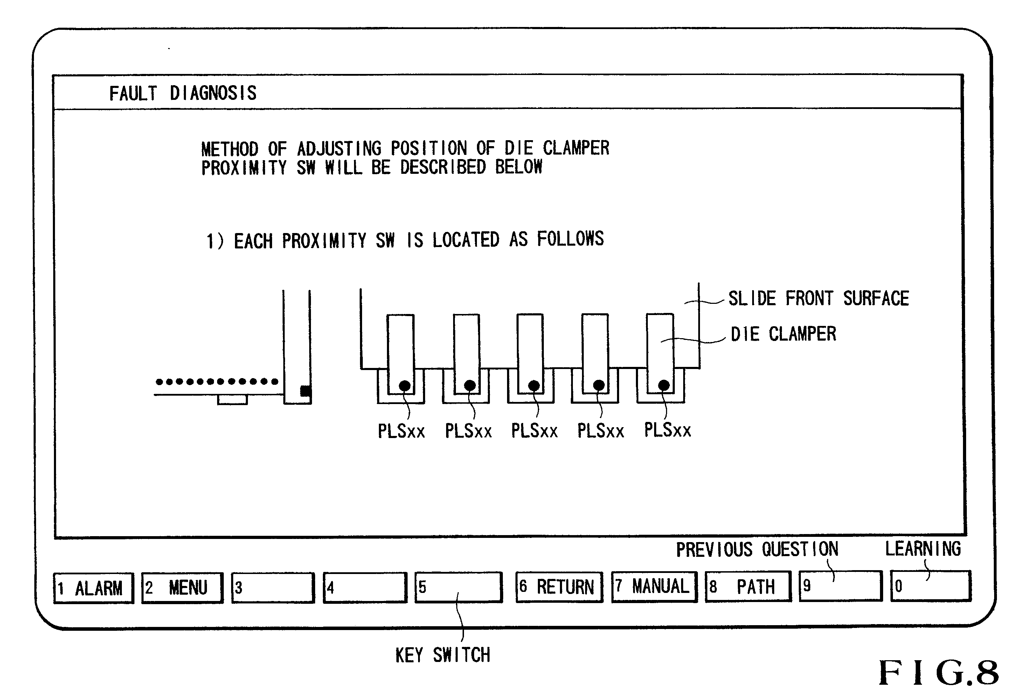

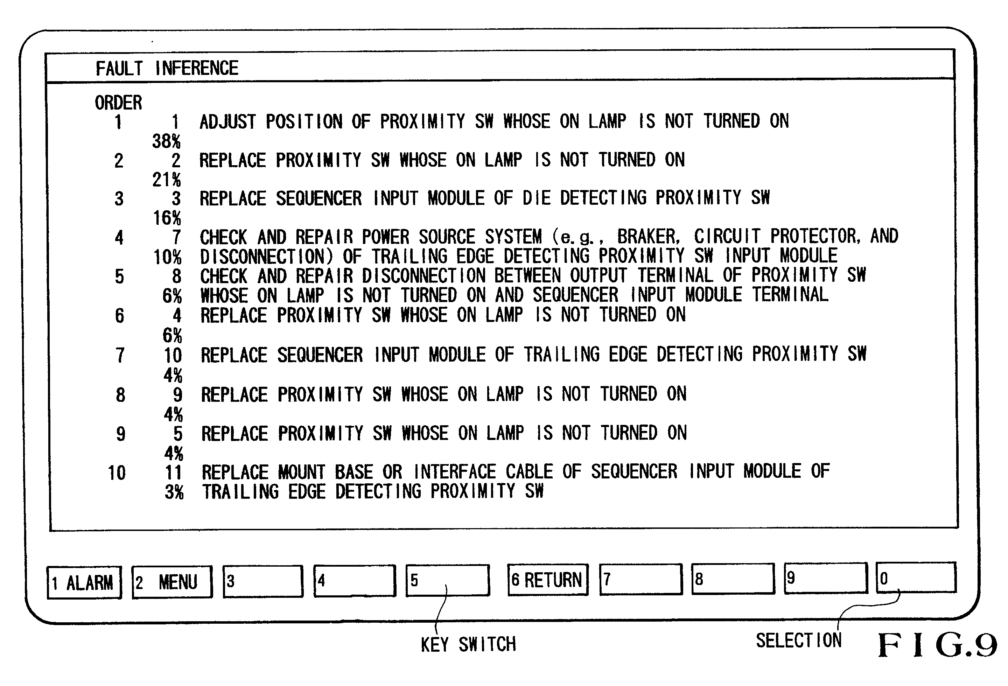

When the manual key designated by the keyboard is depressed, repair items with respect to the cause of a fault are displayed, as shown in Fig. 8. These items are displayed in the order of decreasing probabilities, as shown in Fig. 9.

An operator in charge of repair can perform a repair operation by referring to the above-mentioned repair items.

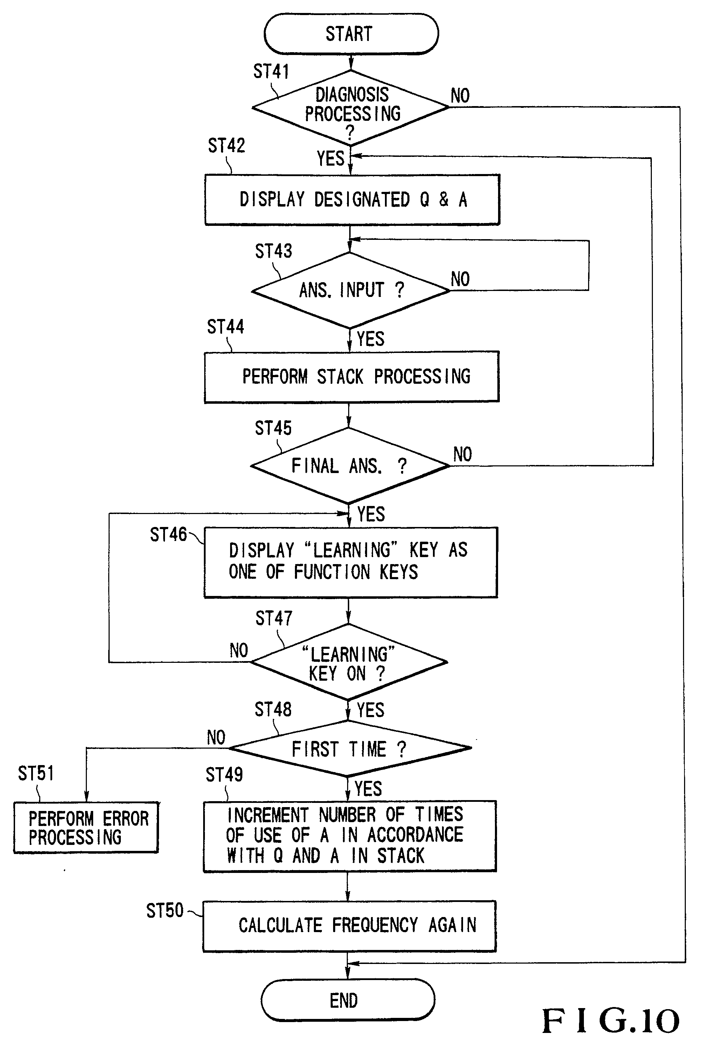

Fig. 10 is a flow chart showing the diagnosis processing in step ST4 in more detail.

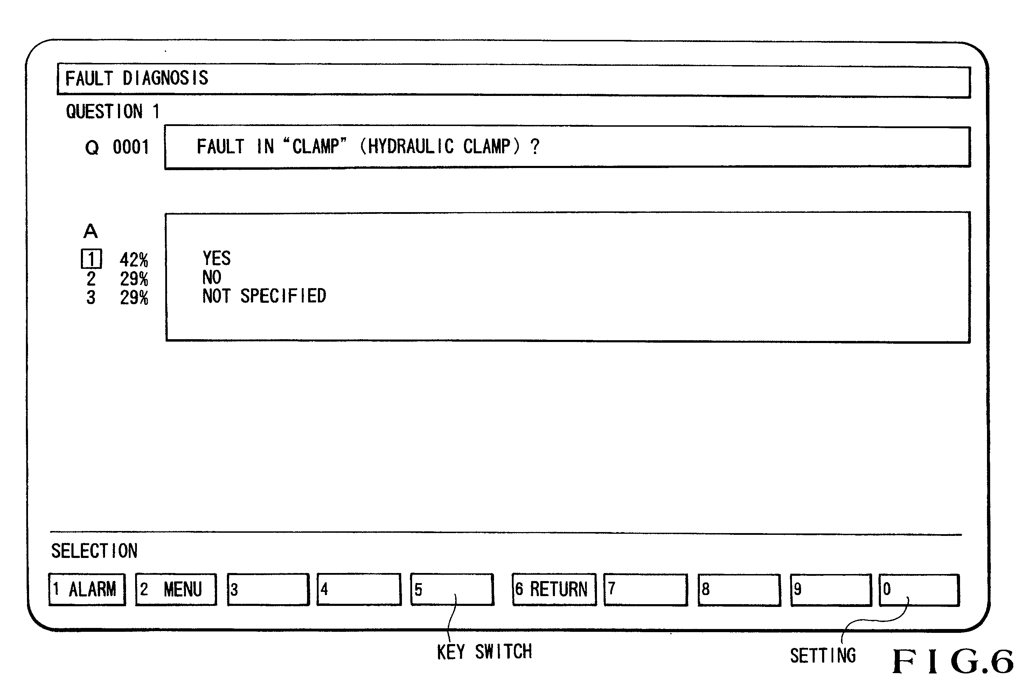

Referring to Fig. 10, it is determined in step ST41 whether diagnosis processing is performed with respect to a specific abnormal state. If the keyboard 5 is operated to perform this processing, the display section 4 displays the first question $Q_1$ (shown in Fig. 2) with respect to the designated point and the probabilities (frequencies) that the states of the answers (choices) $A_1$, $A_2$, and $A_3$ for the question $Q_1$ occur. These probabilities can be arbitrarily set and changed and can be displayed in an arbitrary order instead of displaying them in the order of decreasing values as in Fig. 6.

If the operator selects the answer $A_1$ in step ST43, stack processing is performed in step ST44 to store the selected question $Q_1$ and answer $A_1$. Thereafter, it is checked in step ST45 whether the answer $A_1$ is a final answer. If NO in step ST4S, the flow returns to step ST42 to display the next question Q2 and its answers and waits for selection of an answer in step ST43. The above operation is repeated until the flow reaches to a final answer, and a selected question and answer are stored for each operation.

The above-described operation is repeated in accordance with the fault tree until a final answer is obtained. If an answer for a question is erroneously selected, the flow can return to the step for the previous question.

If a final answer, i.e., the cause of the fault, is selected and displayed, a learning key is displayed on the display section 4 as one of function keys in step ST46. If this learning key is depressed once in step ST47, the counts of all the selected answers are updated in the memory 3a in step ST49 through step ST48. Note that if the learning key is consecutively depressed twice, the flow advances to step ST51 to perform error processing. Subsequently, in step ST50, the probabilities of the associated answers are calculated by using the counts updated in step ST49, and the memory 3a is updated on the basis of the calculation result.

As described above, by sequentially updating the above-mentioned probabilities, a learning function is added to the fault diagnosis function. That is, the accuracy of probabilities respectively displayed with respect to a plurality of answers for one question is increased every time diagnosis is performed to facilitate selection by an operator. Therefore, the cause of a fault can be detected within a short period of time.

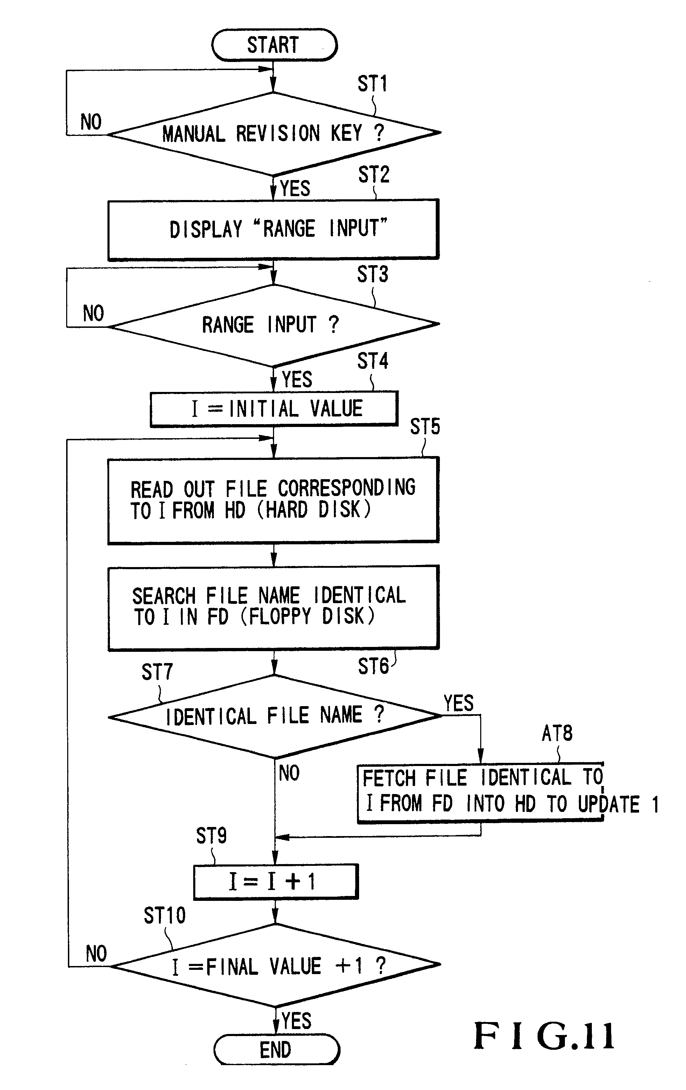

Fig. 11 is a flow chart showing an operation to be executed by a CPU 3b when fault repair items stored in the memory 3a are to be updated.

The memory 3a stores fault trees for a plurality of faults. In addition, the memory 3a normally stores a plurality of causes of faults for the respective fault trees, and also stores fault repair items for the respective causes of faults. Therefore, the memory 3a stores data of a large number of fault repair items. When these fault repair items are to be updated, corresponding portions of the memory 3a must be rewritten. The FD unit 6 is used as an input unit for inputting update data for this update operation.

Referring to Fig. 11, when a fault repair item revision key as one of the function keys is depressed in step ST1, an "input range" is displayed in a lower portion of the screen of the display section 4 in step ST2. In step ST3, an address range (e.g., 10 to 20) corresponding to portions of the contents of the memory 3a which are to be updated. After I = initial value = is set in step ST4, filing data of the fault repair item which corresponds to the initial value 1 is read out from the memory 3a (hard disk). At the same time, in step ST6, update data reproduced from the FD of the FD unit 6 are sequentially compared with the data read out from the memory 3a one by one. If it is determined in step ST7 that there is update data identical to the initial value I, the update data is fetched to rewrite the portion corresponding to I in the memory 3a by using the update data. After the rewrite operation or NO is obtained in step ST7, the value I is incremented by one as I + 1 in step ST9. Thereafter, in step ST10, it is checked whether the value I + 1 exceeds the final value I = 20. If NO in step ST10, the flow returns to step ST5 to the same processing as described above is repeated. When I = final value + 1, the rewrite operation is completed.

As has been described above, according to the present invention, when selection of questions and answers is performed in the interactive mode by using a fault tree, one cause of a fault is obtained, and fault repair items are displayed. In addition, updated fault repair items can be displayed. With this arrangement, the cause of a fault can be detected within a short period of time. In addition, repair items for the fault can be detected. Therefore, various effects, e.g., an increase in the above-mentioned MTTR, and satisfactory response to an update of the fault repair items, can be obtained.

## Claims

1. A fault diagnosing apparatus comprising:
- a fault tree in which a plurality of choices are set with respect to one question associated with a cause of a fault of a fault diagnosis target, answers and choices branch off from each of the choices, and final choices reach causes of the fault;
- storage means (3a) for storing fault repair items with respect to the causes of the fault;
- read control means (3) for, in response to an input operation to select one of the choices, reading out the selected choice, a corresponding question, choices branching off therefrom, and fault repair items;
- display means (4) for displaying the question, the choices, and the fault repair items which are read out by the read control means;
- designating means (6) for designating to update the fault repair items; and
- rewrite means (6) for rewriting some of the fault repair items stored in said storage means by using update data externally provided on the basis of the designation from said designating means.

2. A fault diagnosing method comprising the steps:
- providing a fault tree in which a plurality of choices are set with respect to one question associated with a cause of a fault of a fault diagnosis target, answers and choices branch off from each of the choices, and final choices reach causes of the fault;
storing fault repair items with respect to the causes of the fault;
- reading out in response to an input operation to select one of the choices, the selected choice, a corresponding question, choices branching off therefrom, and fault repair items;

displaying the question, the choices, and the fault repair items which are read out;

- designating to update the fault repair items; and

- rewriting some of the stored fault repair items stored by using update data externally provided on the basis of the designation.

FIG.1

FIG.2

FIG.3

7

**F I G.4**

EP 0 428 135 A2

ABNORMAL STATE TABLE

NO. ADDRESS    NAME

x x x    xxxx W1 FRONT TYPE DETECTION PLS ON / OPERATION DELAY

x x x    xxxx W2 FRONT TYPE DETECTION PLS ON / OPERATION DELAY

| 1 ALARM | 2 MENU | 3 | 4 | 5 | 6 RETURN | 7 | 8 | 9 | 0 |

NEXT PAGE    KEY SWITCH

SELECTION    FIG.5

EP 0 428 135 A2

FAULT DIAGNOSIS

QUESTION 1

Q 0001 | FAULT IN "CLAMP" (HYDRAULIC CLAMP) ?

A
☐1  42%    YES
2   29%    NO
3   29%    NOT SPECIFIED

SELECTION

| 1 ALARM | 2 MENU | 3 | 4 | 5 | 6 RETURN | 7 | 8 | 9 | 0 |

KEY SWITCH                                    SETTING    FIG.6

EP 0 428 135 A2

FAULT DIAGNOSIS

A   0001   | ADJUST POSITION OF PROXIMITY SW WHOSE ON LAMP IS NOT TURNED ON

PREVIOUS QUESTION

| 1 ALARM | 2 MENU | 3 | 4 | 5 | 6 RETURN | 7 MANUAL | 8 PATH | 9 | 0 |

KEY SWITCH

LEARNING

FIG.7

FAULT DIAGNOSIS

METHOD OF ADJUSTING POSITION OF DIE CLAMPER
PROXIMITY SW WILL BE DESCRIBED BELOW

1) EACH PROXIMITY SW IS LOCATED AS FOLLOWS

SLIDE FRONT SURFACE

DIE CLAMPER

PLSxx    PLSxx    PLSxx    PLSxx    PLSxx

| 1 ALARM | 2 MENU | 3 | 4 | 5 | 6 RETURN | 7 MANUAL | 8 PATH | 9 | 0 |

PREVIOUS QUESTION    LEARNING

KEY SWITCH

FIG.8

FAULT INFERENCE

ORDER
1    1    ADJUST POSITION OF PROXIMITY SW WHOSE ON LAMP IS NOT TURNED ON
     38%
2    2    REPLACE PROXIMITY SW WHOSE ON LAMP IS NOT TURNED ON
     21%
3    3    REPLACE SEQUENCER INPUT MODULE OF DIE DETECTING PROXIMITY SW
     16%
4    7    CHECK AND REPAIR POWER SOURCE SYSTEM (e.g., BRAKER, CIRCUIT PROTECTOR, AND
     10%  DISCONNECTION) OF TRAILING EDGE DETECTING PROXIMITY SW INPUT MODULE
5    8    CHECK AND REPAIR DISCONNECTION BETWEEN OUTPUT TERMINAL OF PROXIMITY SW
     6%   WHOSE ON LAMP IS NOT TURNED ON AND SEQUENCER INPUT MODULE TERMINAL
6    4    REPLACE PROXIMITY SW WHOSE ON LAMP IS NOT TURNED ON
     6%
7    10   REPLACE SEQUENCER INPUT MODULE OF TRAILING EDGE DETECTING PROXIMITY SW
     4%
8    9    REPLACE PROXIMITY SW WHOSE ON LAMP IS NOT TURNED ON
     4%
9    5    REPLACE PROXIMITY SW WHOSE ON LAMP IS NOT TURNED ON
     4%
10   11   REPLACE MOUNT BASE OR INTERFACE CABLE OF SEQUENCER INPUT MODULE OF
     3%   TRAILING EDGE DETECTING PROXIMITY SW

| 1 ALARM | 2 MENU | 3 | 4 | 5 | 6 RETURN | 7 | 8 | 9 | 0 |

KEY SWITCH                                    SELECTION    FIG.9

EP 0 428 135 A2

```
                        ┌─────────────┐
                        │    START    │
                        └──────┬──────┘
                               │
                ST41      ╱────┴────╲
                        ╱  DIAGNOSIS  ╲       NO
                       ╲ PROCESSING  ╱────────────────┐
                        ╲    ?     ╱                   │
                          ╲──┬──╱                      │
                   ST42     YES │  ◄──────────────┐    │
              ┌─────────────────┴──────────────┐  │    │
              │  DISPLAY DESIGNATED Q & A       │  │    │
              └─────────────────┬──────────────┘  │    │
                                │ ◄────────────┐   │    │
                 ST43      ╱────┴────╲          │   │    │
                          ╱           ╲   NO    │   │    │
                         ╲  ANS. INPUT? ╱───────┘   │    │
                          ╲───┬────╱                │    │
                   ST44     YES │                   │    │
              ┌─────────────────┴──────────────┐    │    │
              │   PERFORM STACK PROCESSING      │    │    │
              └─────────────────┬──────────────┘    │    │
                                │                    │    │
                 ST45      ╱────┴────╲               │    │
                          ╱           ╲    NO        │    │
                         ╲  FINAL ANS.? ╱────────────┘    │
                          ╲───┬────╱                      │
                           YES │ ◄──────────┐             │
             ST46 ┌────────────┴──────────┐ │             │
                  │ DISPLAY "LEARNING" KEY │ │             │
                  │  AS ONE OF FUNCTION    │ │             │
                  │        KEYS            │ │             │
                  └────────────┬──────────┘ │             │
                               │            │             │
                ST47      ╱────┴────╲        │             │
               NO        ╱ "LEARNING"╲       │             │
         ┌──────────────╲  KEY ON ?  ╱       │             │
         │               ╲────┬────╱         │             │
         │        ST48    YES │              │             │
         │     ╱─────────────┴─────────╲     │             │
         │ NO ╱       FIRST TIME ?       ╲   │             │
    ┌────┴───╲                           ╱   │             │
    │         ╲───────────┬─────────────╱    │             │
 ST51 │                   YES │               │             │
 ┌────┴──────────┐  ST49 ┌────┴────────────────────┐       │
 │ PERFORM ERROR │       │ INCREMENT NUMBER OF TIMES│       │
 │  PROCESSING   │       │ OF USE OF A IN ACCORDANCE │       │
 └───────────────┘       │ WITH Q AND A IN STACK     │       │
                         └────┬──────────────────────┘       │
                              │                              │
          ST50 ┌──────────────┴──────────────┐               │
               │  CALCULATE FREQUENCY AGAIN   │               │
               └──────────────┬──────────────┘               │
                              │ ◄────────────────────────────┘
                        ┌─────┴──────┐
                        │    END     │
                        └────────────┘
```

F I G.10

14

START

ST1

NO ← MANUAL REVISION KEY ?

YES ST2

DISPLAY "RANGE INPUT"

ST3

NO ← RANGE INPUT ?

YES ST4

$I = $ INITIAL VALUE

ST5

READ OUT FILE CORRESPONDING TO I FROM HD (HARD DISK)

SEARCH FILE NAME IDENTICAL TO I IN FD (FLOPPY DISK)

ST7 ST6

IDENTICAL FILE NAME ? — YES

NO

AT8

FETCH FILE IDENTICAL TO I FROM FD INTO HD TO UPDATE 1

ST9

$I = I + 1$

ST10

NO ← $I = $ FINAL VALUE $+ 1$ ?

YES

END

F I G.11